# EUROPEAN PATENT APPLICATION

(11) **EP 4 786 817 A1**
(43) Date of publication of application: **05.08.2026**
(21) Application number: 26153749.2
(22) Date of filing: 23.01.2026
(51) Int. Cl.: F16F 9/512

(54) **DAMPER ASSEMBLY WITH FREQUENCY ADAPTIVE ORIFICE**

(30) Priority: 27.01.2025 CN 202510127911
(71) Applicant: BeijingWest Industries Co. Ltd., 102400 Beijing (CN)
(72) Inventor: FRANCZYK, Bartlomiej, 31-066 Kraków, Skawinska 18/14 (PL); LUSARCZYK, Pawe, 32-400 Myslenice, Sredniawskiego 10 (PL); ROSTEK, Sergiusz, 33-100 Tarnów, Krakowska 29/2 (PL); KNAPCZYK, Marcin, 31-261 Kraków, Rusznikarska 14/120 (PL)
(74) Representative: Lukaszyk, Szymon

(57) **Abstract**

A damper assembly includes a housing having a tubular shape defining a main chamber extending along a center axis. A piston is movable along the center axis and divides the main chamber into a compression chamber and a rebound chamber. The piston includes a piston body defining a frequency-adaptive orifice (FAO) passage providing fluid communication between the compression chamber and the rebound chamber. The piston includes an FAO valve assembly having an FAO cover member configured to block fluid flow therethrough in response to application of a low-frequency excitation, and allowing fluid flow through the FAO passage in response to application of a high-frequency excitation. The FAO valve assembly also includes a tappet configured to translate relative to the piston body to bias the FAO cover member to selectively cover the FAO passage in response to the application of the low-frequency excitation.

## Description

### Technical Field

The present invention generally relates to a damper assembly for a vehicle.

### Background of the Invention

Damper assemblies are well known in the art for use in a vehicle. One such a damper assembly is disclosed in Patent publication US5706920A which discloses a monotube damper assembly including a main tube disposed on a center axis and extending between a first end and a second end. The damper defines a fluid compartment between the first end and the second end for containing a working fluid. A main piston is slidably disposed in the fluid compartment dividing the fluid compartment into a rebound chamber and a compression chamber. A piston rod is disposed on the center axis extending along the center axis to a distal end and attached to the main piston for moving the main piston between a compression stroke and a rebound stroke.

Conventional, passive shock absorber valves offer a poor compromise between performance, safety and driving comfort. To improve this situation, active and semi-active suspensions are often proposed. They, however, require the use of additional sensors, ECUs and control algorithms, what makes them complicated and extremely expensive. For this reason, adaptive passive valves are becoming more and more popular and are desired by car manufacturers.

Various adaptive valve technologies provide damping characteristics that depend not only on damper velocity but also on excitation frequency. Such solutions allow to achieve high damping forces for low frequencies, related to body motions and low damping forces for high frequencies, related to vibrations of the wheels.

It is known in the art for damper assemblies to include a frequency-dependent valve assembly to provide the damper assembly with the ability to reduce the level of damping force for high frequency events to provide better comfort and road holding for occupants. However, known valve assemblies are generally expensive, complex and have limited capabilities for tuning. Furthermore, most existing frequency-dependent valves are configured as add-ons that are attached to an existing damper design. These add-on valves may significantly increase dead-length of a damper. Moreover, they often require drilling of additional, intersecting bypass holes, which is an expensive process that generates contaminants and can weakens portions of the damper, such as a valve tenon. Accordingly, an improved damper assembly is desired.

### Summary of the invention

The present invention provides a damper assembly. The damper assembly includes a housing having a tubular shape extending along a center axis, and a piston movable through the housing along the center axis. The damper assembly also includes a body defining a frequency-adaptive orifice (FAO) passage providing fluid communication between a first chamber and a second chamber. The damper assembly also includes an FAO valve assembly having an FAO cover member configured to selectively cover the FAO passage to block fluid flow therethrough in response to application of a low-frequency excitation below a predetermined frequency, the FAO valve assembly further configured to allow fluid flow through the FAO passage in response to application of a high-frequency excitation above the predetermined frequency. The FAO valve assembly further includes a tappet configured to translate relative to the body to bias the FAO cover member to selectively cover the FAO passage in response to the application of the low-frequency excitation in an at least one of a compression direction or a rebound direction opposite the compression direction.

The present invention also provides a piston for a damper assembly. The piston includes a piston body defining a frequency-adaptive orifice (FAO) passage for providing fluid communication between a compression chamber and a rebound chamber. The piston also includes an FAO valve assembly having an FAO cover member configured to selectively cover the FAO passage to block fluid flow therethrough in response to application of a low-frequency excitation below a predetermined frequency. The FAO valve assembly is further configured to allow fluid flow through the FAO passage in response to application of a high-frequency excitation above the predetermined frequency. The FAO valve assembly further includes a tappet configured to translate relative to the piston body to bias the FAO cover member to selectively cover the FAO passage in response to the application of the low-frequency excitation in an at least one of a compression direction or a rebound direction opposite the compression direction.

In a further embodiment, the damper assembly includes a housing having a tubular shape extending along a center axis and a piston movable through the housing along the center axis. The piston is mounted on a rod within the housing. There is a body defining a frequency-adaptive orifice (FAO) passage providing fluid communication between a first chamber and a second chamber. An FAO valve assembly having an FAO cover member is configured to selectively cover the FAO passage to block fluid flow through in response to the application of a low-frequency excitation below a predetermined frequency. The FAO valve assembly is further configured to allow fluid flow through the FAO passage in response to the application of a high-frequency excitation above the predetermined frequency.

The FAO valve assembly has a tappet configured to translate relative to the body to bias the FAO cover member to selectively cover the FAO passage in response to the application of the low-frequency excitation in at least one of a compression direction or a rebound direction opposite the compression direction. A tappet spring disc configured to bias the tappet.

### Brief description of the drawings

Other advantages of the present invention will be readily appreciated, as the same becomes better understood by reference to the following detailed description when considered in connection with the accompanying drawings wherein:
FIG. 1 shows a cross-sectional perspective view of a damper assembly;
FIG. 2 shows an enlarged cross-sectional perspective view of a piston of the damper assembly, including a frequency-adaptive orifice valve;
FIG. 3 shows an exploded view of the piston of the damper assembly including the frequency-adaptive orifice valve;
FIG. 4 shows a perspective view of a guiding sleeve for the frequency-adaptive orifice valve of the present disclosure;
FIG. 5A shows an enlarged cross-sectional fragmentary view of the piston, showing fluid flow therethrough during application of a low-frequency excitation;
FIG. 5B shows an enlarged cross-sectional fragmentary view of the piston, showing fluid flow therethrough during application of a high-frequency excitation;
FIG. 6A shows an enlarged cross-sectional fragmentary view of the piston during a rebound stroke, in a low-frequency state, and showing fluid flow therethrough;
FIG. 6B shows an enlarged cross-sectional fragmentary view of the piston during a rebound stroke, in a high-frequency state, and showing fluid flow therethrough;
FIG. 7A shows an enlarged cross-sectional fragmentary view of the piston during a compression stroke, in a low-frequency state, and showing fluid flow therethrough;
FIG. 7B shows an enlarged cross-sectional fragmentary view of the piston during a compression stroke, in a high-frequency state, and showing fluid flow therethrough;
FIG. 8 shows a graph illustrating rebound force vs. velocity characteristics of a damper with the frequency-adaptive orifice valve of the present disclosure under standard and high-frequency conditions; and
FIG. 9 shows a graph illustrating rebound force vs. stroking frequency of a damper with the frequency-adaptive orifice valve of the present disclosure and at constant velocity of 0.131 meters/second.
FIG. 10 shows an enlarged cross-sectional perspective view of a second embodiment of the piston of the damper assembly, including a frequency-adaptive orifice valve;
FIG. 11 shows an exploded view of the piston of the second embodiment of the damper assembly including the frequency-adaptive orifice valve;
FIG. 12 shows a partial cross sectional view of the piston of the second embodiment of the damper assembly including the frequency-adaptive orifice valve;
FIG. 13 shows a perspective view of the inlet disc;
FIG. 14 shows a perspective view of the outlet disc;
FIG. 15A shows a face view of the damper rod;
FIG. 15B shows a side view of the damper rod;
FIG. 16 shows a first graph illustrating rebound force vs. velocity characteristics of a damper with the frequency-adaptive orifice valve of the second embodiment; and
FIG. 17 shows a second graph of rebound force vs. stroking frequency of a damper with the frequency-adaptive orifice valve of the second embodiment.

### Detailed Description

Referring to the Figures, wherein like numerals indicate corresponding parts throughout the several views, it is one aspect of the present invention to provide a damper assembly 20, which may be used as a part of a suspension in a vehicle, such as a passenger car or truck. The damper assembly 20 of the present disclosure is shown as a monotube damper. However, the principles of the present disclosure may be used with other types of dampers, such as in a twin-tube damper.

The damper assembly 20 of the present disclosure provides a unique solution for the implementation of a Frequency Adaptive Orifice (FAO) within a piston valve assembly.

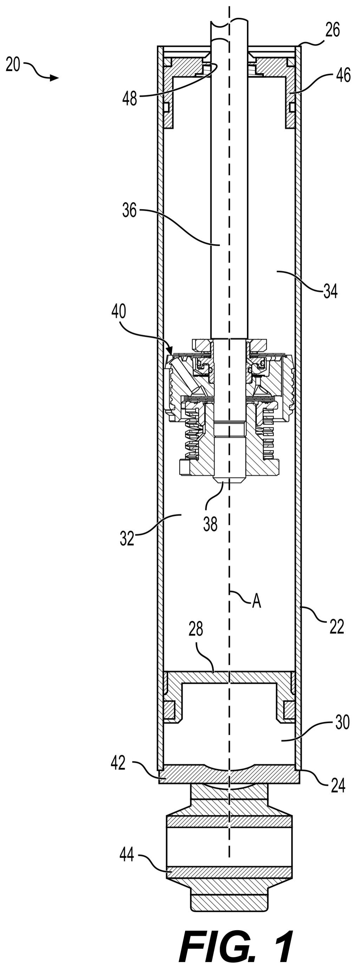

As generally shown in FIG. 1, the damper assembly 20 includes a housing 22 having a tubular shape extending along a center axis A between a first end 24 and a second end 26 and defining a main compartment 30, 32, 34 therein. The damper assembly 20 also includes a gas cup 28 disposed in the main compartment 30, 32, 34 in sealing engagement with the housing 22 and slidable along the center axis A to divide the main compartment 30, 32, 34 into a gas compartment 30 for containing a gas and a fluid compartment 32, 34. The gas compartment 30 extends between the first end 24 and the gas cup 28, and the fluid compartment 32, 34 extends between the gas cup 28 and the second end 26.

The damper assembly 20 also includes a damper rod 36 that extends along the center axis A. The damper rod 36 includes a rod end 38 located inside of the fluid compartment 32, 34. A piston 40 is attached to the damper rod 36 adjacent to the rod end 38, and configured to move with the damper rod 36 along the center axis A through the housing 22. The piston 40 divides the fluid compartment 32, 34 into a compression chamber 32 and a rebound chamber 34. The compression chamber 32 extends between the piston 40 and the gas cup 28, and the rebound chamber 34 extends between the second end 26 and the piston 40.

A first closure 42 seals the gas compartment 30 at the first end 24 of the housing 22. A damper mount 44 is attached to the first closure 42 and configured to attach the damper assembly 20 to a body of a vehicle (not shown). The damper assembly 20 of the present disclosure may be used in other configurations and/or orientations. For example, the damper mount 44 may connect the housing 22 of the damper assembly 20 to a chassis component of the vehicle 10.

The damper assembly 20 also includes a second closure 46 disposed adjacent to the second end 26 of the housing 22 to enclose the rebound chamber 34. The second closure 46 defines a bore 48 for the damper rod 36 to pass through. The second closure 46 may provide a fluid-tight seal with the damper rod 36 to prevent fluid from leaking out of the rebound chamber 34.

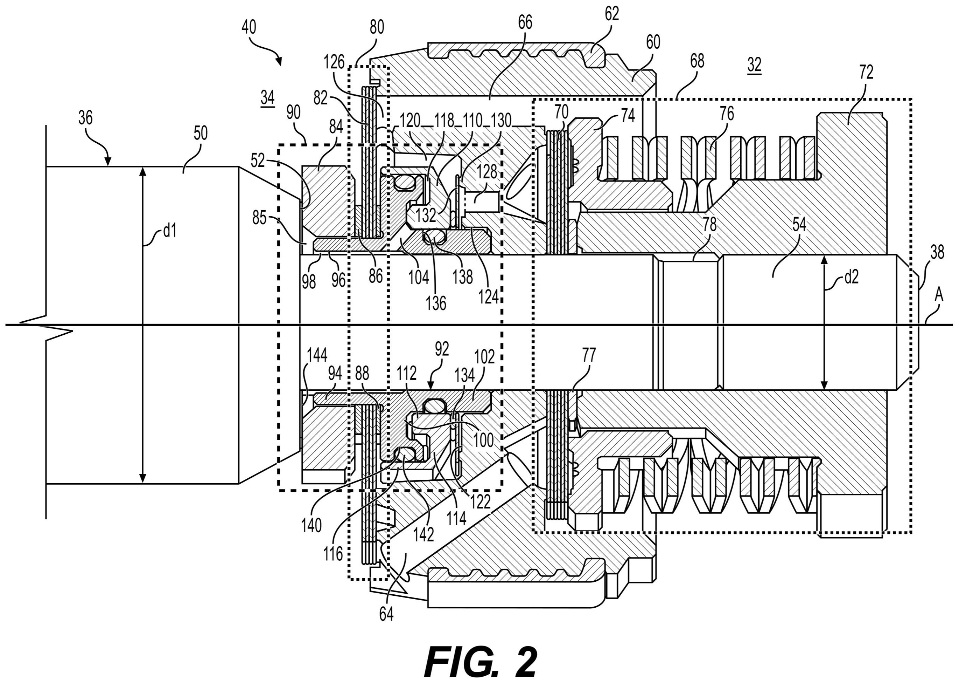

FIG. 2 shows an enlarged cross-sectional perspective view of the piston 40 of the present disclosure. As shown in FIG. 2, the damper rod 36 includes a rod body 50 having a cylindrical shape with a first diameter d1, a rod shoulder 52 spaced apart from and facing toward the rod end 38. The damper rod 36 also includes a rod extension 54 extending from the rod shoulder 52 to the rod end 38 and having a generally cylindrical shape with a second diameter d2 smaller than the first diameter d1.

As also shown in FIG. 2, the piston 40 includes a piston body 60 disposed around the rod extension 54. The piston body 60 includes an annular seal 62 of resilient material configured to seal against an inner surface of the housing 22 (not shown in FIG. 2). The piston body 60 defines a rebound passage 64 in fluid communication with the rebound chamber 34 and providing a path for fluid flow to the compression chamber 32. The piston body 60 also defines a compression passage 66 in fluid communication with the compression chamber 32 and providing a path for fluid flow to the rebound chamber 34.

The piston 40 also includes a rebound valve assembly 68 configured to regulate fluid flow from the rebound chamber 34 to the compression chamber 32 during a rebound stroke, with the damper rod 36 pulling the piston 40 toward the second end 26. The rebound valve assembly 68 includes a rebound disc stack 70 including a plurality of discs covering an end of the rebound passage 64 opposite from the rebound chamber 34 and configured to deflect away from the rebound passage 64 in response to a pressure differential thereacross, and to thereby regulate fluid flow through the rebound passage 64 and into the compression chamber 32.

The rebound valve assembly 68 also includes a shoulder nut 72 and a spring seat 74, with a spring 76 extending therebetween to bias the rebound disc stack 70 to cover the rebound passage 64. A rebound spacer disc 77 having a disc shape is disposed around the rod extension 54 between the rebound disc stack 70 and the shoulder nut 72. The rebound spacer disc 77 has a smaller diameter than the rebound disc stack 70 for supporting an inner region of the rebound disc stack 70 while allowing a radially outer portion of the rebound disc stack 70 to deflect axially away from the piston body 60 for regulating the fluid flow through the rebound passage 64.

The piston 40 also includes a compression valve assembly 80 configured to regulate fluid flow from the compression chamber 32 to the rebound chamber 34 during a compression stroke, with the damper rod 36 pushing the piston 40 toward the first end 24 of the housing 22. The compression valve assembly 80 includes a compression disc stack 82 having a plurality of discs covering an end of the compression passage 66 opposite from the compression chamber 32. The compression disc stack 82 is configured to deflect away from the compression passage 66 in response to a pressure differential thereacross, and to thereby regulate fluid flow through the compression passage 66 and into the rebound chamber 34.

As can be seen in FIG. 2, the compression valve assembly 80 includes a compression disc retainer 84 having a ring shape disposed about the rod extension 54 between the rod shoulder 52 and the compression disc stack 82. The compression valve assembly 80 also includes a first spacer disc 86 disposed around the rod extension 54 adjacent to the compression disc stack 82 and between the compression disc retainer 84 and the compression disc stack 82. The first spacer disc 86 has a smaller diameter than the compression disc stack 82 for supporting an inner region of the compression disc stack 82 while allowing a radially outer portion of the compression disc stack 82 to deflect axially away from the piston body 60 for regulating the fluid flow through the compression passage 66. The compression valve assembly 80 also includes a second spacer disc 88 having a disc shape disposed around the rod extension 54 adjacent to the compression disc stack 82 and opposite from the first spacer disc 86. The thickness of the second spacer disc 88 may define a preload of the compression disc stack 82. The compression disc retainer 84 and the rod extension 54 together define a lower chamber 85 adjacent to the rod shoulder 52.

The piston 40 also includes a frequency-adaptive orifice (FAO) valve assembly 90 that includes a guiding sleeve 92 disposed around the rod extension 54. The guiding sleeve 92 includes a proximal tubular portion 94 having a tubular shape disposed around and coaxial with the rod extension 54 and adjacent to the rod shoulder 52. The proximal tubular portion 94 has a first inner surface 96 that is spaced apart from the rod extension 54 to define a first balance passage 98 therebetween. The guiding sleeve 92 also includes a disc-shaped portion 100 extending radially outwardly from an end of the proximal tubular portion 94 spaced apart from the rod shoulder 52. The disc-shaped portion 100 is disposed annularly about the proximal tubular portion 94 of the guiding sleeve 92. The guiding sleeve 92 also includes a distal tubular portion 102 having a tubular shape and extending axially from the disc-shaped portion 100 away from the rod shoulder 52. The distal tubular portion 102 is disposed coaxially with and tightly against the rod extension 54, with little to no space therebetween. The guiding sleeve 92 further defines a second balance passage 104 extending radially outwardly from the first balance passage 98 and axially through the disc-shaped portion 100. The compression valve assembly 80 is disposed around the proximal tubular portion 94 of the guiding sleeve 92, with the second spacer disc 88 separating the compression disc stack 82 from the disc-shaped portion 100. The distal tubular portion 102 of the guiding sleeve 92 further defines a plurality of indentations 106 in an outer surface thereof.

The FAO valve assembly 90 also includes a tappet 110 having a ring shape disposed around and engaging the guiding sleeve 92 and configured to translate relative to the piston body 60 in an axial direction. The tappet 110 includes an inner tubular portion 112 disposed around the distal tubular portion 102 of the guiding sleeve 92 and configured to slide therealong. The tappet 110 further includes a flange portion 114 having an annular shape extending radially outwardly from the inner tubular portion 112. The tappet 110 also includes an outer tubular portion 116 extending annularly around the flange portion 114 and axially toward the rod shoulder 52. The outer tubular portion 116 of the tappet 110 is disposed annularly around the disc-shaped portion 100 of the guiding sleeve 92 and is configured to slide therealong. The tappet 110 defines a tappet chamber 118 surrounded by the outer tubular portion 116 and extending between the flange portion 114 and the disc-shaped portion 100 of the guiding sleeve 92.

The piston body 60 defines an FAO chamber 120 having a generally cylindrical shape coaxially surrounding the rod extension 54, with a lower wall 122 facing toward the rod shoulder 52. The guiding sleeve 92 and the tappet 110 are disposed within the FAO chamber 120. The piston body 60 also defines an inner bore 124 having a cylindrical shape coaxially surrounding the rod extension 54 extending in an axial direction from the lower wall 122 away from the rod shoulder 52. The inner bore 124 is configured to receive an end of the distal tubular portion 102 of the guiding sleeve 92 for locating the guiding sleeve 92 with the piston body 60.

The piston body 60 also defines a first FAO passage 126 providing fluid communication between the compression passage 66 and the FAO chamber 120. The piston body 60 further defines a second FAO passage 128 providing fluid communication between the rebound passage 64 and the FAO chamber 120. The piston body 60 also includes an annular protrusion 130 extending in an axial direction from the lower wall 122 and into the FAO chamber 120 adjacent to and radially outwardly from the second FAO passage 128.

The FAO valve assembly 90 further includes an FAO cover member 132 configured to selectively cover the second FAO passage 128 to block fluid flow therethrough. The FAO cover member 132 may be formed as a disc that is disposed annularly around the distal tubular portion 102 of the guiding sleeve 92 abutting the annular protrusion 130, as shown in FIG. 2. However, the FAO cover member 132 could have a different shape or configuration. The FAO valve assembly 90 also includes an FAO spacer 134 having a ring shape disposed annularly around the distal tubular portion 102 of the guiding sleeve 92 and between the tappet 110 and the FAO cover member 132.

The distal tubular portion 102 of the guiding sleeve 92 includes an outer surface defining a first seal slot 136 holding a first O-ring seal 138 that seals against an inner surface of the inner tubular portion 112 of the tappet 110. The disc-shaped portion 100 of the guiding sleeve 92 includes an outer surface defining a second seal slot 140 holding a second O-ring seal 142 that seals against an inner surface of the outer tubular portion 116 of the tappet 110.

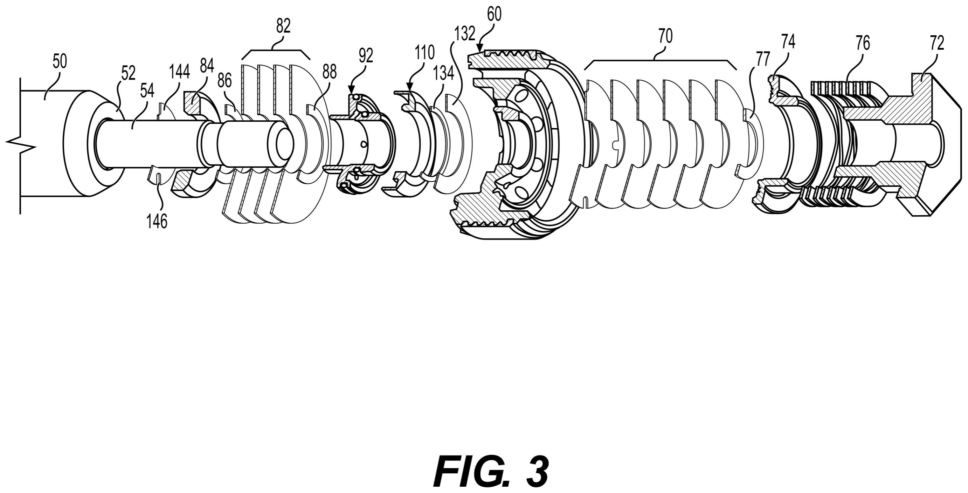

The FAO valve assembly 90 also includes a valve control disc 144 having an annular shape and disposed adjacent to the rod shoulder 52 and between the rod shoulder 52 and the compression disc retainer 84. As best shown on FIG. 3, valve control disc 144 defines a control orifice 146 that extends at least partially through the valve control disc 144 in a radial direction from an outer edge thereof for providing fluid communication between the rebound chamber 34 and the lower chamber 85.

Referring back to FIG. 2, the first balance passage 98 and the second balance passage 104 together provide fluid communication between the lower chamber 85 and the tappet chamber 118 to pressurize the tappet chamber 118 during a rebound stroke. This pressurization of the tappet chamber 118 causes the tappet 110 to be biased away from the rod shoulder 52 and toward the FAO cover member 132, thereby causing the FAO cover member 132 to cover the second FAO passage 128 and to prevent fluid flow therethrough.

The FAO cover member 132 is supported by the tappet 110 that preloads the FAO cover member 132 depending on a volume of fluid, such as oil, and pressure in the tappet chamber 118. The tappet chamber 118 is supplied with oil from the rebound chamber 34 via the valve control disc 144, which is located between the rod shoulder 52 and the compression disc retainer 84. According to an aspect of the present disclosure, the FAO cover member 132 works in both directions, and thus provide extended functionality in both rebound and compression strokes.

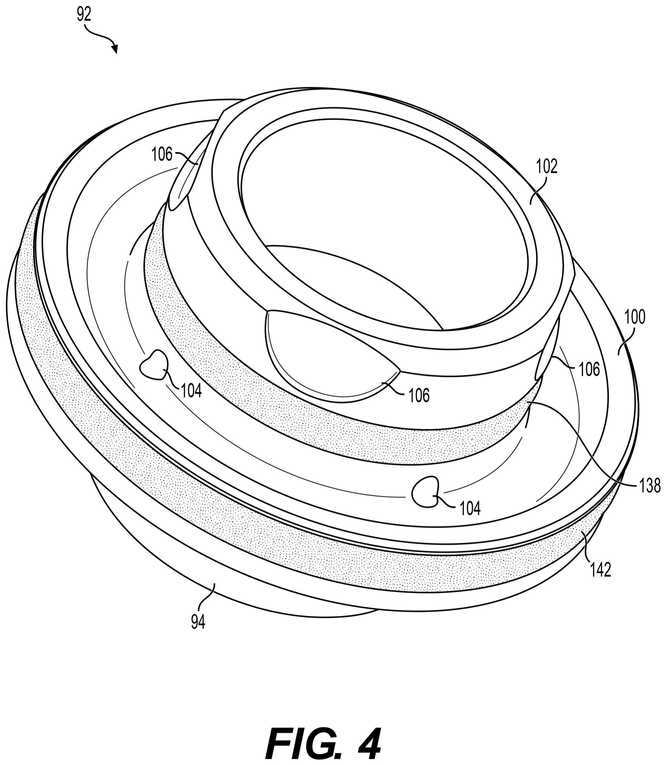

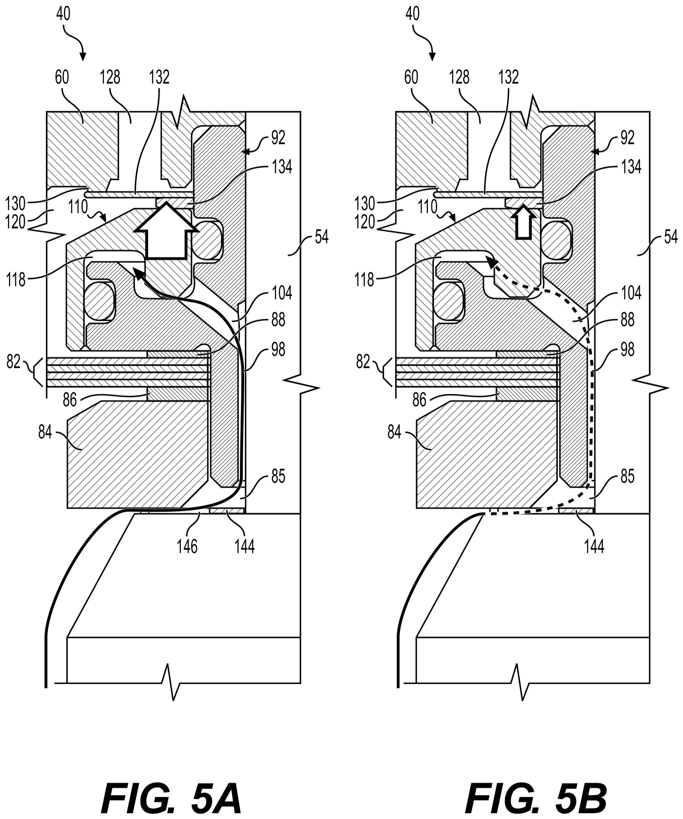

FIG. 3 shows an exploded view of the piston 40 including the FAO valve assembly 90. FIG. 4 shows a perspective view of the guiding sleeve 92. FIG. 5A shows an enlarged cross-sectional fragmentary view of the piston 40, showing fluid flow therethrough during application of a low-frequency excitation, below a predetermined frequency. During low-frequency operation, shown in FIG. 5A, the throttling effect of the control orifice 146 is low, so the tappet chamber 118 surrounded is effectively fed with fluid through the valve control disc 144 and the balance passages 98, 104. Pressure in the tappet chamber 118 is relatively high, and the tappet 110 is forced against the FAO cover member 132, thus increasing its preload.

FIG. 5B shows an enlarged cross-sectional fragmentary view of the piston 40, showing fluid flow therethrough with the damper assembly 20 during application of a high-frequency excitation, above the predetermined frequency. During high-frequency operation, the FAO cover member 132 throttles the flow of fluid, and so there is high pressure drop between the rebound chamber 34 and the tappet chamber 118. Pressure acting on the tappet 110, and thereby preload of the FAO cover member 132 is relatively small, making the FAO valve assembly 90 less stiff.

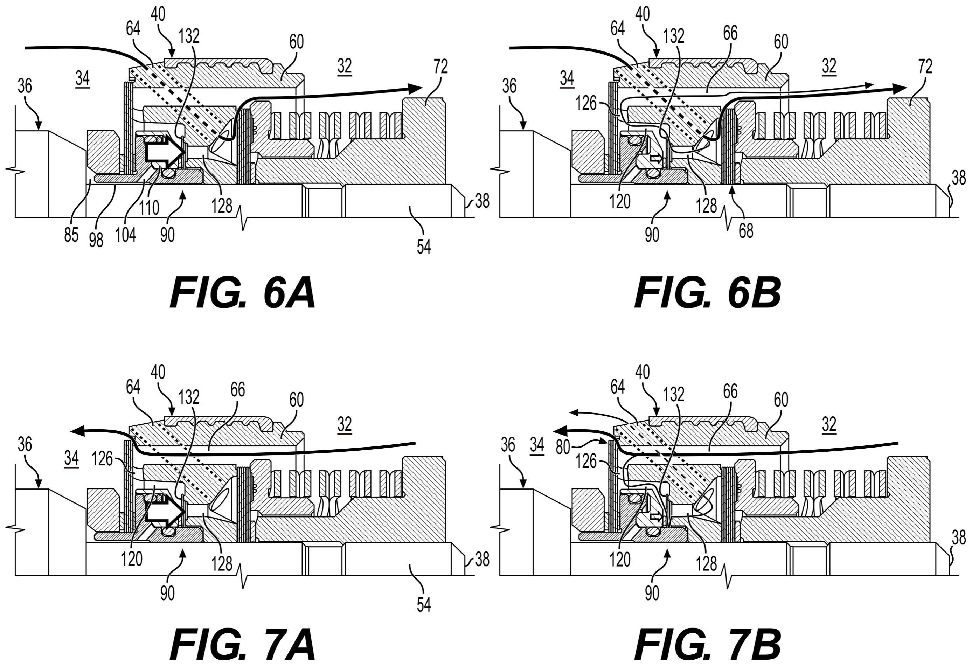

FIG. 6A shows an enlarged cross-sectional fragmentary view of the piston 40 during a rebound stroke, in a low-frequency state, and showing fluid flow therethrough. FIG. 6A shows the FAO valve assembly 90 in an inactive state, with the FAO cover member 132 blocking fluid flow through the second FAO passage 128. The FAO cover member 132 may be biased to block the second FAO passage 128 during the rebound stroke, preventing fluid flow therethrough. For example, the tappet 110 may press the FAO cover member 132 to block the second FAO passage 128 by fluid pressure in the tappet chamber 118 being greater than a fluid pressure in the FAO chamber 120. FIG. 6B shows an enlarged cross-sectional fragmentary view of the piston 40 during a rebound stroke, in a high-frequency state, and showing fluid flow therethrough. The FAO valve assembly 90 may allow fluid flow through one or more FAO passages 126, 128 in response to application of a high-frequency excitation above a predetermined frequency. The predetermined frequency may also be called a cutoff frequency.

As shown in FIG. 6B, the FAO valve assembly 90 provides a rebound bypass fluid path from the rebound chamber 34 to the compression chamber 32, bypassing the rebound valve assembly 68, in response to a high-frequency rebound excitation applied to the piston 40. The FAO valve assembly thereby reduces the force generated by the damper assembly 20 in response to the high-frequency rebound excitation by allowing fluid flow through the rebound bypass fluid path. The FAO valve assembly 90 also blocks the rebound bypass fluid path in response to a low-frequency rebound excitation applied to the piston 40, as shown in FIG. 6A.

The rebound bypass fluid path through the FAO valve assembly 90 is illustrated in FIG. 6B and includes the FAO passages 126, 128. More specifically, the rebound bypass fluid path includes fluid flow from the rebound chamber 34, through the rebound passage 64 and the second FAO passage 128, past the FAO cover member 132 and into the FAO chamber 120. The rebound bypass fluid path then includes the fluid flowing from the FAO chamber 120 through the first FAO passage 126 and the compression passage 66 and then to the compression chamber 32. In this case, rebound damping force is decreased.

FIG. 7A shows an enlarged cross-sectional fragmentary view of the piston 40 during a compression stroke, in a low-frequency state, and showing fluid flow therethrough. FIG. 7A shows the FAO valve assembly 90 in an inactive state, with the FAO cover member 132 blocking fluid flow through the second FAO passage 128. In this inactive state, the FAO cover member 132 may be biased to block the second FAO passage 128 during the compression stroke, preventing fluid flow therethrough. For example, the FAO cover member 132 may be deflected to block the second FAO passage 128 by fluid pressure in the FAO chamber 120 being greater than a fluid pressure in the second FAO passage 128. FIG. 7B shows an enlarged cross-sectional fragmentary view of the piston 40 during a compression stroke, in a high-frequency state, and showing fluid flow therethrough.

As shown in FIG. 7B, the FAO valve assembly 90 provides compression bypass fluid path from the compression chamber 32 to the rebound chamber 34, bypassing the compression valve assembly 80, in response to a high-frequency compression excitation applied to the piston 40. The FAO valve assembly thereby reduces the force generated by the damper assembly 20 in response to a high-frequency compression excitation by allowing fluid flow through the compression bypass fluid path. The FAO valve assembly 90 also blocks the compression bypass fluid path in response to a low-frequency compression excitation, as shown in FIG. 7A.

The compression bypass fluid path through the FAO valve assembly 90 is illustrated in FIG. 7B and includes the FAO passages 126, 128. More specifically, the compression bypass fluid path includes fluid flow from the compression chamber 32, through the compression passage 66 and the first FAO passage 126, and into the FAO chamber 120. The compression bypass fluid path then includes the fluid flowing from the FAO chamber 120, past the FAO cover member 132, through the second FAO passage 128 and the rebound passage 64, and then to the rebound chamber 34. The indentations 106 in the distal tubular portion 102 of the guiding sleeve 92 (shown in FIG. 4) may provide a path for fluid flow from the FAO chamber 120 and to the second FAO passage 128 when the FAO cover member 132 is deflected toward the piston body 60, as shown in FIG. 7B.

The operating characteristics of the FAO valve assembly 90 can be adjusted by one or more of: oil flow area of the control orifice 146 (e.g. number and width of slots), a number and thickness of working discs comprising the FAO cover member 132, a number and/or cross-sectional area of the first FAO passages 126 and/or second FAO passages 128 in the piston body 60, and/or a thickness of the FAO spacer 134 that defines a nominal working disc preload of the FAO cover member 132.

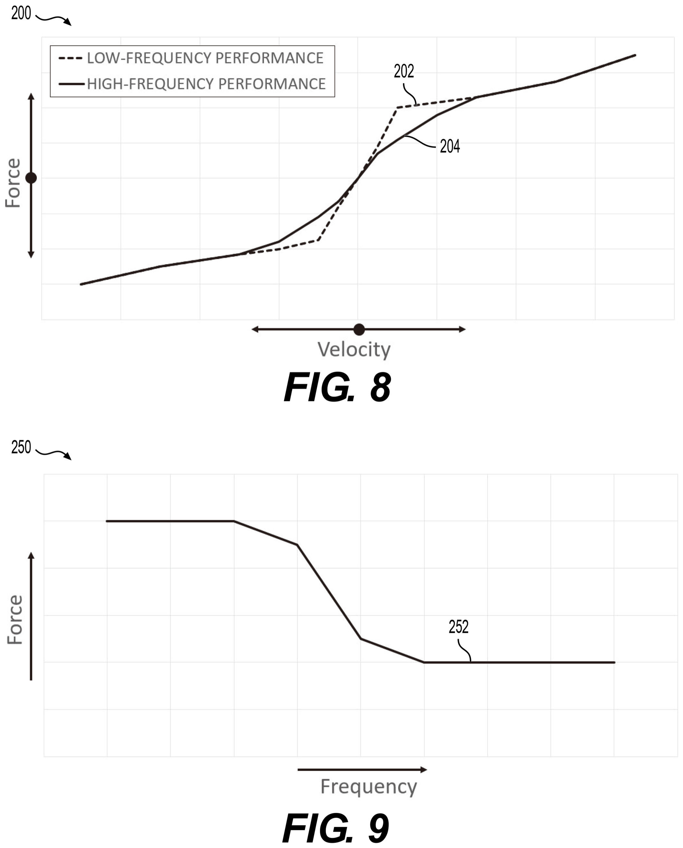

FIG. 8 shows a first graph 200 illustrating rebound force vs. velocity characteristics of a damper with the frequency-adaptive orifice valve of the present disclosure under standard and high-frequency conditions. The first graph 200 includes a first plot 202 showing force vs. velocity for the damper under low-frequency excitation conditions. The first graph 200 also includes a second plot 204 showing force vs. velocity for the damper under high-frequency excitation conditions. FIG. 9 shows a second graph 250 with a plot 252 showing rebound force vs. stroking frequency of a damper with the frequency-adaptive orifice valve of the present disclosure and at constant velocity. The FAO valve assembly 90 may be adjusted or tuned to provide any predetermined cutoff frequency ranging from about 2.0 Hz to about 12 Hz.

The FAO valve assembly 90 of the present disclosure is shown and described as located within a compression side of the piston 40. However, other configurations are possible. For example, the FAO valve assembly 90 may be located on the rebound side of the piston 40 or on both sides of the piston 40, simultaneously. Alternatively or additionally, an FAO valve may be disposed within a compression valve assembly (i.e. a base valve assembly) of a twin-tube damper assembly. Such a twin-tube damper may include an inner tube disposed within the housing 22 and defining a main chamber within the inner tube and an exterior chamber between the inner tube and the housing 22, wherein the piston divides the main chamber into a compression chamber and a rebound chamber. A twin-tube damper may also include a base assembly including a base valve configured to regulate fluid flow between the main chamber and the exterior chamber. The base assembly may include the body that defines the FAO passage.

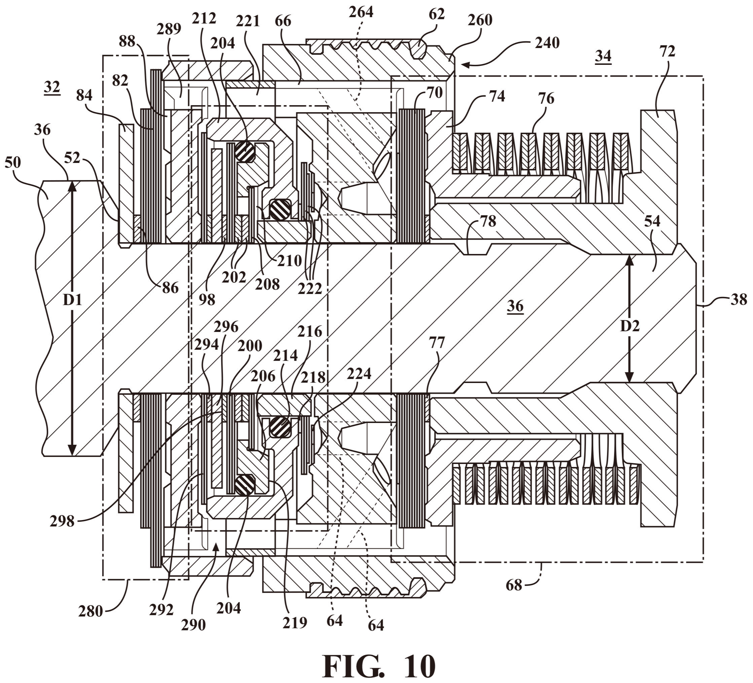

With reference to figures 10 through 17, a second embodiment of the present invention is illustrated. In this embodiment, greater space or volume is created in the piston shown generally at 240. The piston 240 includes a first piston 260 and a second piston 289 to create this volume, and a sleeve 221, which in the disclosed embodiment is made of metal. This creates more volume than the original piston 40. The FAO 290 is mounted between these two pistons, 260 and 289. The two pistons 260 and 289 are operatively connected by the sleeve 221. This creates technological space for building a more complex FAO system than the original invention.

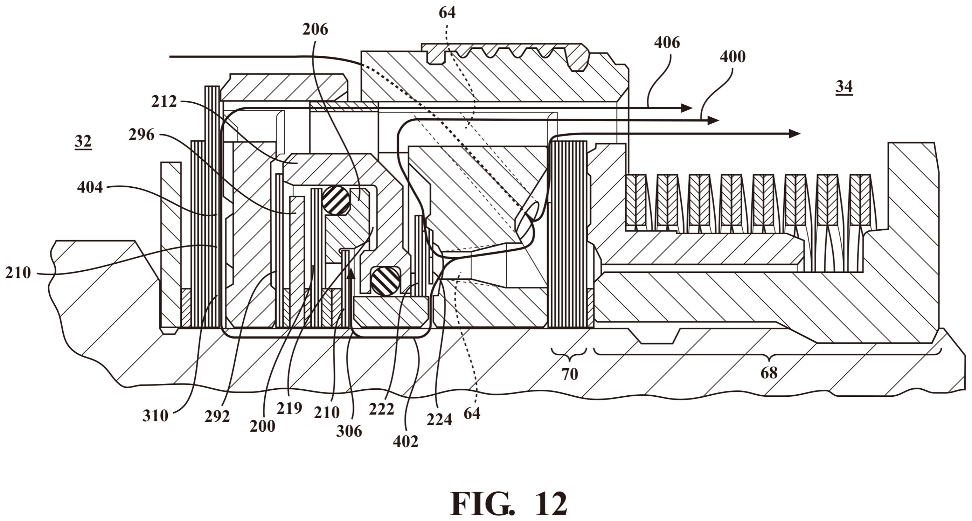

The rebound valve assembly 68 is the same as previously described as rebound valve assembly 68, and the numbering is the same as previously numbered. This is the main rebound valve, and part of the oil stream can flow through bypass disc stack 222. The disc stack 222 can deflect and let oil flow through, as seen in figure 12.

The piston 240 also includes a frequency-adaptive orifice (FAO) valve assembly 290 that is configured to work in parallel with the rebound valve assembly 68 and may include a dynamic pressure feedback circuit configured to provide (e.g., during a rebound stroke) relatively high damping forces for relatively low-frequency excitations and relatively low damping forces for relatively high-frequency excitations. The low-frequency and high-frequency thresholds and the associated damping forces may be altered (e.g., increased or reduced) and the slope of the drop characteristic may be adjusted by changing the valve settings.

The FAO valve assembly 290 is disposed between a second piston 289 and first piston 260 that may be interconnected by a connecting sleeve 221, and the rebound valve assembly 68 and the compression valve assembly 280 are disposed on either side of the FAO valve assembly 290. The FAO valve assembly 290 includes a tappet spring disc stack 292, a tappet spring spacer 294, a retainer 296, and a second spacer 298. The tappet spring disc stack 292 is positioned adjacent to the piston 289 and the tappet spring spacer 294 is disposed between the tappet spring disc stack 292 and the retainer 296. The second spacer 298 is disposed between the retainer 296 and an accumulator disc stack 200. The piston 260 defines one or more apertures or passages 264 that may be configured to receive and direct the working fluid to and from the piston 289 and the piston 260.

The FAO valve assembly 290 may also include one or more (e.g., two) accumulator spacers 202, a floating sleeve 206, a tappet 212, a guiding sleeve 216, and a bypass disc stack 222. The accumulator spacers 202 may have a smaller diameter than the discs of the accumulator disc stack 200 and an inner diameter of the floating sleeve 206. An outer o-ring 204 is disposed about an outer periphery of the floating sleeve 206, and a centering disc 208 and orifice disc 211 are disposed between the accumulator spacers 202 and a guiding sleeve 216. The orifice disc 211 is generally the same as the outlet disc 210, except that the slots are larger to allow oil flow into and out of a secondary chamber 219. An inner o-ring 214 is disposed within an inner periphery of the tappet 212 and the guiding sleeve 216 is disposed within the tappet 212. A bypass spacer 218 is disposed between the guiding sleeve 216 and the bypass disc stack 222. In this embodiment, an inlet control orifice 224 is disposed between the bypass disc stack 222 and the upper piston 260.

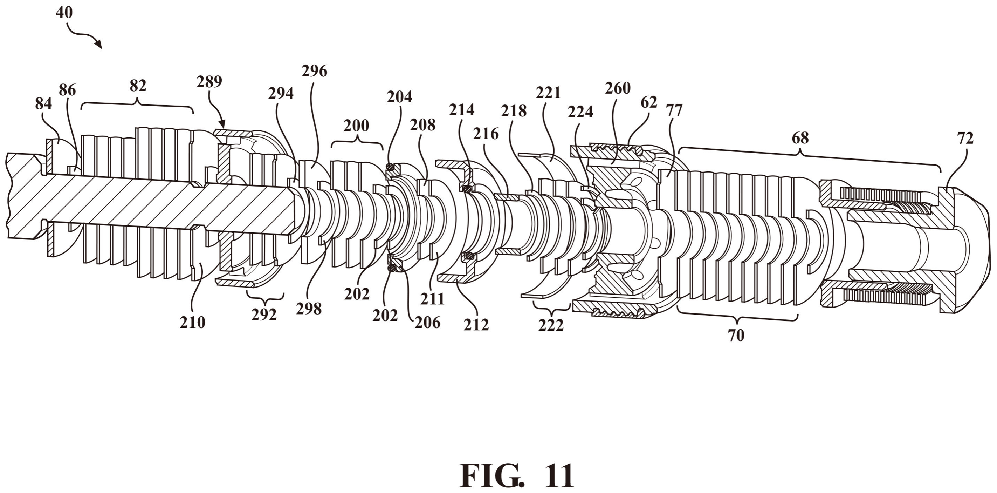

FIG. 11 shows an exploded view of the piston assembly 240 shown in FIG. 10. FIG. 12 illustrates a partial-cross-sectional view of the piston assembly 240 shown in FIGS 10 and 11. During a rebound stroke, the working fluid may be routed from the rebound chamber 32 to the compression chamber 34 through the piston assembly 240. As an example, the working fluid may be forced through the rebound passages 264 defined by the piston 260 towards the rebound disc stack 70, and the working fluid may be split into one or more (e.g., two) paths disposed on each side of the piston 260. One of the two paths 264 may route the working fluid to the compression chamber 34 by the rebound valve assembly 68.

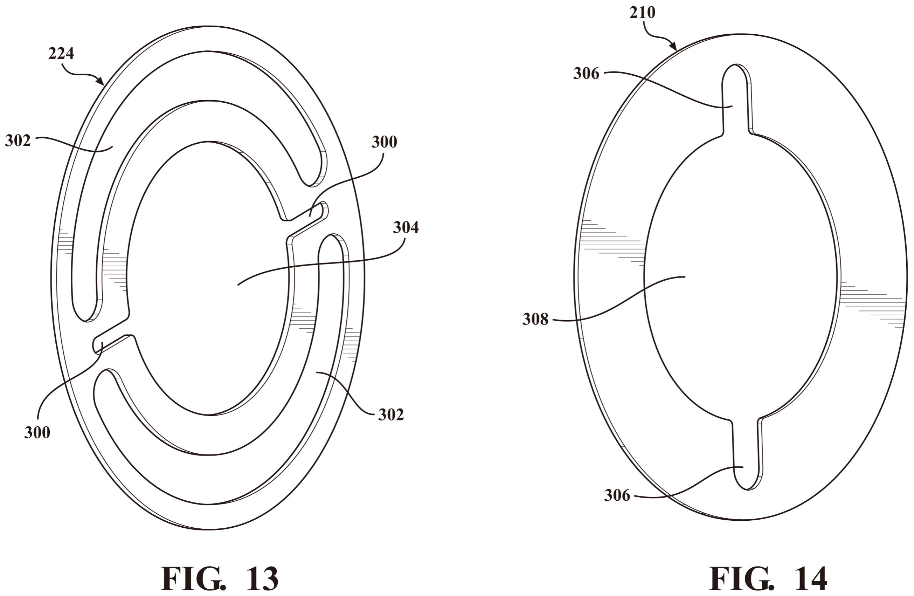

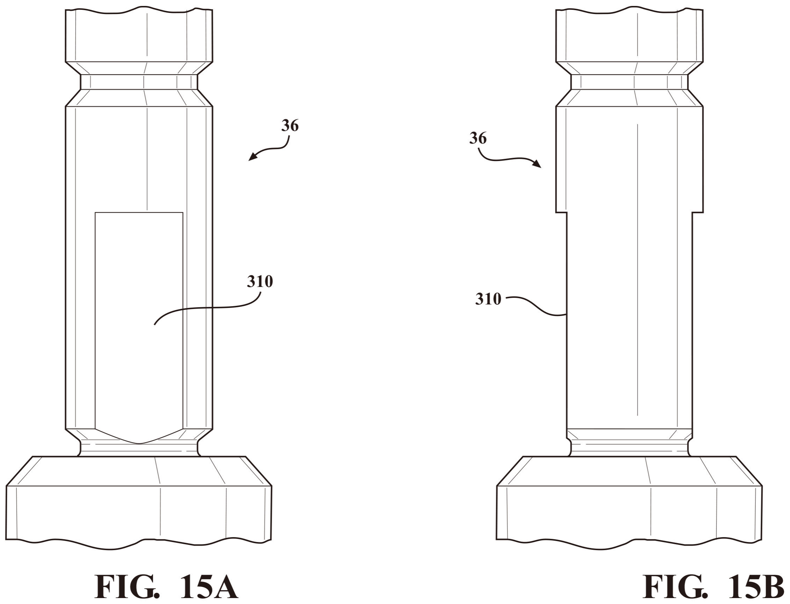

The frequency effect is obtained in part by means of the specific arrangement of inlet disc 224 and outlet disc 210. With reference to figures 13 and 14, the inlet disc 224 has a central opening 304, slots 300 and openings 302, which in the disclosed embodiment are half-moon shaped. It will be understood by those of ordinary skill in the art, that the number, shape and size of the slots and openings may change depending upon the parameters desired. The outlet disc 210 has a central opening 308 and slots 306. It will be understood by those of ordinary skill in the art, that the number, shape and size of the slots and openings may change depending upon the parameters desired. The damper rod 36 shown in figures 15A and 15B has reliefs 310 formed on opposing sides of rod 36. The openings 304 and 308 are received by the rod 36 and the slots 300 and 306 are in communication with reliefs 310 to allow oil to flow therebetween.

The rebound valve assembly 68 operates in the same manner as previously described. Rebound valve assembly 68 is the main rebound valve, and part of the oil stream path 400 can flow through inlet disc 224 and bypass disc stack 222. The disc stack 222 can deflect and let oil flow through, as seen in figure 12.

Tappet 212 preloads the disc stack 222. Tappet 212 works in the same manner as previously described with respect to tappet 112. Oil flows into the tappet chamber 219 to preload the disc stack 222. The amount of oil entering chamber 219 is controlled by small orifice 300 on inlet disc 224. As the pressure increases inside the tappet 212, it moves to the right and acts upon disc stack 222 to control flow through the disc stack 222. So the greater the pressure inside the tappet 212, the greater the reaction force on discs 222, resulting in less oil flow through disc stack 222

In this embodiment, more control of the pressure inside the tappet 212 is provided. Accumulator disc stack 200 is provided and is clamped between spacers 202, 294, 298, and retainer 296 but the outer areas of accumulator disc stack 200 can deflect. As a result, when the pressure grows inside the tappet 212, the tappet 212 moves to the right, but the floating sleeve 206 moves to the left, as illustrated, or away from the tappet 212 and deflects accumulator disc stack 200. So now the volume of oil in chamber 219 increases as floating sleeve 206 moves to the left as shown in the drawings or as it moves away from tappet 212. The volume in chamber 219 increases in both directions, as tappet 212 moves in one direction and floating sleeve 206 moves in the opposite direction. Retainer 296, which in the disclosed embodiment is a solid disc, controls the amount of deflection of accumulator disc stack 200.

The tappet spring disc stack 292 provides extra force on the tappet 212. The tappet spring disc stack 292 forces the tappet 212 to the right even if there is no pressure inside chamber 219. The result is that tappet 212 moves or floats between the disc stacks 222 and 292. For example, in the steady state, when the damper is not moving, and there is no pressure in chamber 219, discs 222 and 292 hold the tappet 212 in place. An important benefit is the ability to preload the tappet 212. Spacer 294 can be sized to allow discs 292 to deflect in the initial stage to preload discs 292. The spacer 294 can be sized such that the discs 292 are fixed at their central portion, but flex at the outer portion of the discs 292. This results in the preloading of the disc's outer portion to the right, as illustrated.

The solid line 406 represents the cumulative oil flow through the FAO 290 flow path. With reference to figures 12, and 14 through 15B, oil flows along the reliefs 310 on rod 36 and through the slots 300 in inlet control orifice 224. The slots 300 are precisely tuned to control the amount of oil flowing into chamber 219. The openings 302 allow the oil to flow between the rebound passage 64 in the piston 260 and disc stack 222, as shown by fluid path 400. Fluid path 400, represents the bypass flow, and the solid line 402 is the control circuit. The oil flows through the inlet control orifice 224, along the reliefs 310 with a small amount of oil entering chamber 219 and a small amount of oil flows along path 404 to move second piston 289 and flow along second piston 289 to the compression chamber 34. The outlet control orifice 210 has slots 306 to permit the oil to flow along path 404. The slots 306 are tuned or sized as needed. Therefore, by applying specific ratios of the slots 300 on the inlet control orifice 224, and the slots 306 on the outlet control orifice, the pressure in accumulator 219 can be controlled.

This system provides high damping forces when the suspension operates with low frequency and low damping forces when the suspension works with high frequency. This result is obtained mainly through the flow characteristics through the inlet control orifice 224. When there is a higher pressure on the inlet control orifice 224 side facing piston 260, the oil will flow through, path 404. But because slots 300 are relatively narrow, the pressure on the opposite side of inlet control orifice 224, the side facing the second piston 289, raises at a lower rate than the pressure on the side facing the first piston 260 at high frequencies. The new embodiment as describes provides more time for the pressures to rise.

The invention distinguishes and controls ride characteristics between, for example normal conventional asphalt roads and brick or gravel roads. If the road is smooth, maybe wavy, but the surface is not rough, the FAO valve 290 should be closed. The pressure inside the tappet 212 should rise and the bypass valve 222 should be closed. But when you enter, let's say gravel, when the wheel is shaking with high frequency, the bypass valve 222 should stay opened and then the damper should provide low damping to isolate the vehicle body from this surface roughness.

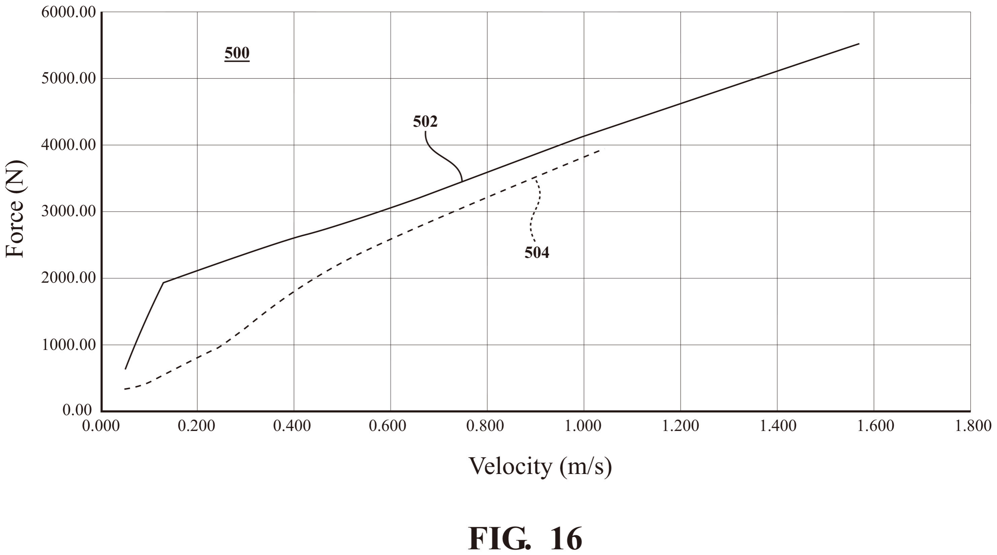

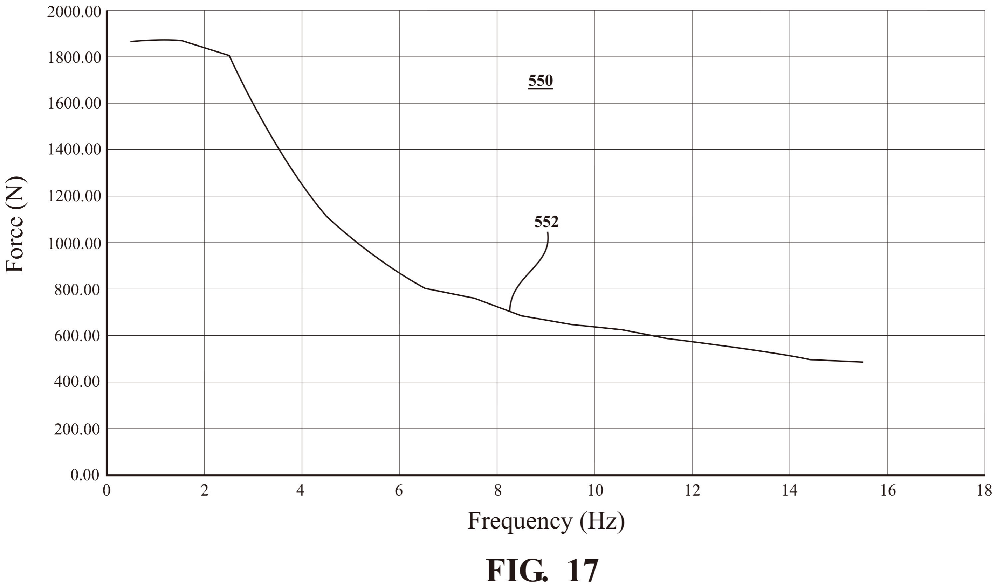

FIG. 16 shows a first graph 500 illustrating rebound force vs. velocity characteristics of a damper with the frequency-adaptive orifice valve of the present disclosure under standard and high-frequency conditions. The first graph 500 includes a first plot 502 showing force vs. velocity for the damper under low-frequency excitation conditions. The first graph 500 also includes a second plot 504 showing force vs. velocity for the damper under high-frequency excitation conditions. FIG. 17 shows a second graph 550 with a plot 552 showing rebound force vs. stroking frequency of a damper with the frequency-adaptive orifice valve of the present disclosure and at constant velocity.

Obviously, many modifications and variations of the present invention are possible in light of the above teachings and may be practiced otherwise than as specifically described while within the scope of the appended claims. These antecedent recitations should be interpreted to cover any combination in which the inventive novelty exercises its utility.

According to an aspect of the present disclosure, a damper assembly is provided. The damper assembly includes a housing having a tubular shape extending along a center axis; a piston movable through the housing along the center axis; a body defining a frequency-adaptive orifice (FAO) passage providing fluid communication between a first chamber and a second chamber; and an FAO valve assembly having an FAO cover member configured to selectively cover the FAO passage to block fluid flow therethrough in response to application of a low-frequency excitation below a predetermined frequency, the FAO valve assembly further configured to allow fluid flow through the FAO passage in response to application of a high-frequency excitation above the predetermined frequency. The FAO valve assembly further comprises a tappet configured to translate relative to the body to bias the FAO cover member to selectively cover the FAO passage in response to the application of the low-frequency excitation in an at least one of a compression direction or a rebound direction opposite the compression direction.

In some embodiments, the housing defines a main chamber, the piston divides the main chamber into a compression chamber and a rebound chamber, the first chamber includes the compression chamber, and the second chamber includes the rebound chamber. In some embodiments, the piston includes a piston body and the piston body is the body defining the FAO passage.

In some embodiments, the tappet is configured to bias the FAO cover member to selectively cover the FAO passage in response to the application of the low-frequency excitation in the rebound direction.

In some embodiments, the piston body defines an FAO chamber with the tappet disposed therein; and the FAO chamber is in fluid communication with the compression chamber.

In some embodiments, the piston body defines a rebound passage in fluid communication with the rebound chamber; the piston further comprises a rebound valve assembly including a rebound disc stack covering an end of the rebound passage to regulate fluid flow from the rebound chamber to the compression chamber during a rebound stroke; and the FAO passage extends between the rebound passage and the FAO chamber to provide fluid communication therebetween.

In some embodiments, the damper assembly further includes a damper rod extending along the center axis and including a rod end located within the main chamber; the piston is attached to the damper rod adjacent to the rod end; the piston further comprises a guiding sleeve disposed about the damper rod; and the tappet has ring shape disposed around and engaging the guiding sleeve.

In some embodiments, the piston further comprises a compression valve assembly configured to regulate fluid flow from the compression chamber to the rebound chamber during a compression stroke, the compression valve assembly including a compression disc stack disposed annularly around the guiding sleeve.

In some embodiments, the guiding sleeve includes a distal tubular portion disposed coaxially with and tightly against the damper rod; and the tappet is disposed around the distal tubular portion and is configured to slide therealong.

In some embodiments, the distal tubular portion of the guiding sleeve includes an outer surface defining a first seal slot receiving a first O-ring seal for sealing against an inner surface of the tappet.

In some embodiments, the guiding sleeve further includes a disc-shaped portion that extends annularly around the damper rod and radially outwardly from the distal tubular portion; the tappet includes an inner tubular portion disposed around the distal tubular portion of the guiding sleeve and configured to slide therealong; the tappet further includes a flange portion and an outer tubular portion, the flange portion having an annular shape extending radially outwardly from the inner tubular portion, the outer tubular portion extending annularly around the flange portion; and the outer tubular portion of the tappet is disposed annularly around the disc-shaped portion of the guiding sleeve and configured to slide therealong.

In some embodiments, the tappet and the guiding sleeve together define a tappet chamber extending between the flange portion of the tappet and the disc-shaped portion of the guiding sleeve; and the tappet chamber is in fluid communication with the rebound chamber via a balance passage.

In some embodiments, the disc-shaped portion of the guiding sleeve includes an outer surface defining a second seal slot with a second O-ring seal disposed therein and sealing against an inner surface of the outer tubular portion of the tappet.

In some embodiments, the tappet defines, at least in part, a tappet chamber; wherein the tappet chamber is in fluid communication with the rebound chamber via a balance passage; and the guiding sleeve defines, at least in part, the balance passage.

In some embodiments, the guiding sleeve includes a proximal tubular portion having a tubular shape disposed around the damper rod and spaced apart therefrom to define, at least in part, the balance passage therebetween.

In some embodiments, the tappet defines, at least in part, a tappet chamber; the tappet chamber is in fluid communication with the rebound chamber via a balance passage; and the FAO valve assembly further comprises a control orifice configured to restrict fluid flow between the rebound chamber and the tappet chamber.

In some embodiments, the damper assembly further comprises a damper rod extending along the center axis and including a rod end located within the main chamber; the piston is attached to the damper rod adjacent to the rod end; the damper rod includes a rod body having a first diameter, a rod shoulder spaced apart from and facing toward the rod end, and a rod extension extending from the rod shoulder to the rod end and having a second diameter smaller than the first diameter; and the FAO valve assembly further comprises a valve control disc disposed around the rod extension and defining, at least in part, the control orifice.

According to an aspect of the present disclosure, a piston for a damper assembly is provided. The piston includes: a piston body defining a frequency-adaptive orifice (FAO) passage for providing fluid communication between a compression chamber and a rebound chamber; an FAO valve assembly having an FAO cover member configured to selectively cover the FAO passage to block fluid flow therethrough in response to application of a low-frequency excitation below a predetermined frequency, the FAO valve assembly further configured to allow fluid flow through the FAO passage in response to application of a high-frequency excitation above the predetermined frequency; and the FAO valve assembly further includes a tappet configured to translate relative to the piston body to bias the FAO cover member to selectively cover the FAO passage in response to the application of the low-frequency excitation in an at least one of a compression direction or a rebound direction opposite the compression direction.

In some embodiments, the piston further includes a guiding sleeve; and the tappet has ring shape disposed around and engaging the guiding sleeve.

In some embodiments, the guiding sleeve includes a distal tubular portion having a tubular shape; and the tappet is disposed around the distal tubular portion and is configured to slide therealong.

In some embodiments, the guiding sleeve further includes a disc-shaped portion that extends radially outwardly from the distal tubular portion; the tappet includes an inner tubular portion disposed around the distal tubular portion of the guiding sleeve and configured to slide therealong; the tappet further includes a flange portion and an outer tubular portion, the flange portion having an annular shape extending radially outwardly from the inner tubular portion, the outer tubular portion extending annularly around the flange portion; and the outer tubular portion of the tappet is disposed annularly around the disc-shaped portion of the guiding sleeve and configured to slide therealong.

Obviously, many modifications and variations of the present invention are possible in light of the above teachings and may be practiced otherwise than as specifically described while within the scope of the appended claims. These antecedent recitations should be interpreted to cover any combination in which the inventive novelty exercises its utility.

## Claims

1. A damper assembly (20) comprising:
a housing (22) having a tubular shape extending along a center axis;
a piston (40, 240) movable through the housing (22) along the center axis;
a rod (36) upon which said piston (40, 240) is mounted;
a body defining a frequency-adaptive orifice (FAO) passage (128) providing fluid communication between a first chamber and a second chamber;
an FAO valve assembly (90, 290) having an FAO cover member (132) configured to selectively cover the FAO passage (128) to block fluid flow therethrough in response to application of a low-frequency excitation below a predetermined frequency, the FAO valve assembly (90, 290) further configured to allow fluid flow through the FAO passage (128) in response to application of a high-frequency excitation above the predetermined frequency; and
the FAO valve assembly (90, 290) having a tappet (110, 212) configured to translate relative to the body to bias the FAO cover member (132) to selectively cover the FAO passage (128) in response to the application of the low-frequency excitation in an at least one of a compression direction or a rebound direction opposite the compression direction;
a tappet spring disc configured to bias said tappet (110, 212).

2. The damper assembly (20) of claim 1, wherein said tappet (110, 212) floats between said tappet spring disc and said FAO cover member (132),
whereby in a steady state, when the damper is not moving, said tappet spring discs and said FAO cover member (132) hold said tappet (110, 212) in place.

3. The damper assembly (20) of claim 2, wherein said tappet spring discs preload said tappet (110, 212).

4. The damper assembly (20) of any one of claims 1 to 3, wherein said tappet spring discs are mounted between tappet spring spacers (294), said spacers (294) have a diameter less than the diameter of said tappet spring discs whereby said spacers (294) engage said tappet spring discs a spaced distance from the periphery of said tappet spring discs allowing the outer periphery to flex.

5. The damper assembly (20) of any one of Claims 1 to 4, wherein the housing (22) defines a main chamber, the piston (40, 240) divides the main chamber into a compression chamber (32) and a rebound chamber (34), the first chamber includes the compression chamber (32), and the second chamber includes the rebound chamber (34); and
wherein the piston (40, 240) includes a piston body (60) and the piston body (60) is the body defining the FAO passage (128).

6. The damper assembly (20) of any one of claims 1 to 5, further including an inlet control orifice (224) operatively controlling fluid flow into out of said FAO chamber (120).

7. The damper assembly (20) of claim 6, wherein said inlet control orifice (224) includes at least one inlet slot for the passage of fluid out of said FAO chamber (120),
particularly wherein said rod (36) includes a recess, said recess and said inlet slot cooperate to allow fluid to pass.

8. The damper assembly (20) of claim 6, wherein said inlet control orifice (224) includes at least one slot for the passage of fluid out of said FAO chamber and into said secondary chamber (219).

9. The damper assembly (20) of any one of claim 6 to 8, wherein said inlet control orifice (224) includes at least one additional opening, allowing fluid to simultaneously flow into said secondary chamber (219) and bypass said secondary chamber (219).

10. The damper assembly (20) of any one of claims 1 to 9, further including a floating sleeve (206) mounted adjacent said tappet (212), said floating sleeve (206) and said tappet (212) defining a secondary chamber (219), said secondary chamber volume changes as said floating sleeve (206) and said tappet (212) move with respect to one another, said volume increases as said floating sleeve (206) and said tappet (212) move away from one another.

11. The damper assembly (20) of any one of claims 8 to 10, further including accumulator discs biasing said floating sleeve (206).

12. The damper assembly (20) of any one of claims 1 to 11, further including a second piston (289).

13. The damper assembly (20) of claims 11 or 12, further including a first outlet control orifice adjacent said second piston (240),
particularly wherein said first outlet control orifice includes at least one outlet slot for the passage of fluid around said piston (40, 240),
particularly wherein said rod includes a recess, said recess and said outlet slot cooperate to allow fluid to pass.

14. The damper assembly (20) of claims 12 or 13 including a second outlet control orifice adjacent said secondary chamber (219), allowing fluid flow into said secondary chamber (219),
particularly wherein said second outlet control orifice includes at least one outlet slot for the passage of fluid around said piston (40, 240),
particularly wherein said rod (36) includes a recess, said recess and said outlet slot cooperate to allow fluid to pass.

15. The damper assembly (20) of any one of Claims 2 to 4, wherein the piston body (60) defines said FAO chamber (120) with said tappet (110) disposed therein; and
wherein said FAO chamber (120) is in fluid communication with the compression chamber (32).
